# EUROPEAN PATENT SPECIFICATION

(11) **EP 1 314 686 B1**
(45) Date of publication and mention of the grant of the patent: **17.01.2007**
(21) Application number: 02255585.8
(22) Date of filing: 09.08.2002
(51) Int. Cl.: B67D 3/00

(54) **Bottled water station**
Anlage zum Spenden von Flaschenwasser
Poste de distribution d'eau en bouteille

(30) Priority: 19.11.2001 KR 2001071891
(43) Date of publication of application: 28.05.2003
(73) Proprietor: Clover Company Ltd., Anyang-si, Kyungki-do 431-082 (KR)
(72) Inventor: Moon, Young Mu, Koonpo-si, Kyungki-do (KR); Lee, Son Kyu, Uiwang-si, Kyungki-do (KR); Park, Hyung Min, Anyang-si, Kyungki-do (KR)
(74) Representative: Brereton, Paul Arthur

(56) References cited:
- US-A- 4 846 236
- US-A- 6 123 232
- US-B1- 6 167 921
- US-B1- 6 193 113

## Description

### BACKGROUND OF THE INVENTION

### 1. Field of the Invention

The present invention relates to a duplex stopper-type water dispensing and water bottle supporting apparatus and, in particular, to an improved duplex stopper-type water dispensing and water bottle supporting apparatus which is adapted to a water bottle-type water supply apparatus in which a water bottle is mounted in an upside down configuration to thereby supply the water to the outside, so that it is possible to implement water discharge and air inflow concurrently in one pipe, thereby decreasing fabrication cost and implementing an easier cleaning operation.

### 2. Description of the Background Art

Generally, a duplex stopper-type water dispensing and water bottle supporting apparatus is basically directed to supplying water from a water bottle which is mounted upside down in a water bottle-type water supply apparatus, to a water storing container using a sanitary method.

Drinking water stored in a 18.925-liter (5-gallon) water bottle having a duplex stopper is commonly used today. In order to effectively access such drinking water, a duplex stopper-type water dispensing and water bottle supporting apparatus is installed on an upper portion of a water bottle-type water supply apparatus. A water storing container is installed in a lower portion of the same. When the water bottle is mounted upside down, the water storing container is filled through a draining pipe of the water dispensing and water bottle supporting apparatus, and the above water is provided to a user through a water discharging tap.

According to U.S. Patent Nos. 5,647,416 and 5,289,854, in order to prevent water from being polluted, various duplex stopper-type water dispensing and water bottle supporting apparatuses are introduced.

In a conventional art, a conventional water bottle-type water supply apparatus 10 includes a water storing container for storing a certain amount of water therein, a cooling apparatus for supplying a cooled water, and a heating apparatus for supplying a heated water. A water discharging tap 11 is installed in an outer side of the water supply apparatus. A water bottle 20 is inserted upside down on an upper open side of the water storing container for thereby supplying a certain amount of water based on the principle of atmospheric pressure.

However, the above apparatuses have disadvantages in that it is impossible to implement an efficient water draining operation due to an alternating exchange of water and air in one pipe. A complicated apparatus capable of separating the water draining pipe and the air inflow pipe may be used, but this increases the fabrication cost.

A duplex stopper-type water dispensing and water bottle supporting apparatus according to the preamble to claim 1 is known from US-A-6,123,232.

A duplex stopper-type water dispensing and water bottle supporting apparatus in accordance with the invention is characterised by the features of claim 1.

Thus, the invention provides a duplex stopper-type water dispensing and water bottle supporting apparatus which overcomes the problems encountered in the conventional art.

The duplex stopper-type water dispensing and water bottle supporting apparatus in the embodiment described below is capable of partially separating the air from a water bottle and the water from the water bottle in one pipe when the water is discharged from the water bottle having a duplex stopper to thereby implement an efficient water discharging operation and also supply sanitized water by purifying the air which flows into the interior of the water storing container.

In the preferred embodiment, the plurality of guide plates are installed to bisect the water draining apertures and to separate the water draining apertures in parallel with the water draining pipe, and a water spreading prevention shoulder portion is formed in a lower portion of such pipe.

The air filtering apparatus preferably includes a casing having an air path formed in a lateral portion and a filter installed in the interior of the same. A check valve may be installed in a lower portion of the apparatus for opening and closing an air hole based on a buoyancy.

### BRIEF DESCRIPTION OF THE DRAWINGS

The present invention will become better understood with reference to the accompanying drawings which are given only by way of illustration and thus are not limitative of the present invention, wherein;

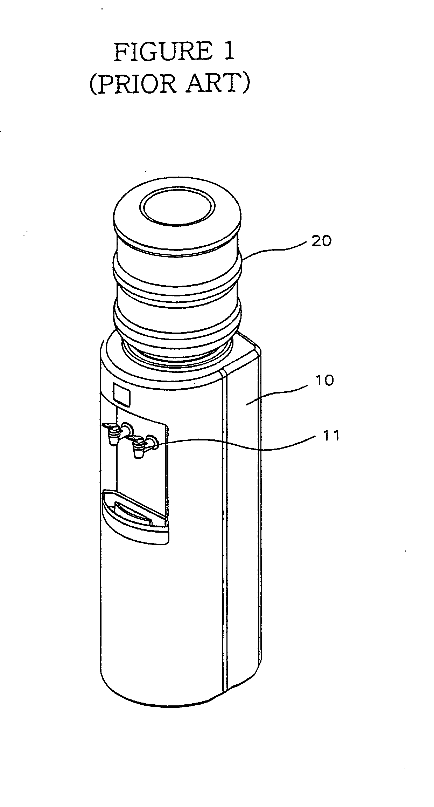

Figure 1 is a perspective view illustrating conventional water bottle type water supply apparatus;
Figure 2 is a perspective view illustrating a duplex stopper-type water dispensing and water bottle supporting apparatus according to the present invention;
Figure 3 is a cross-sectional view illustrating the duplex stopper-type water dispensing and water bottle supporting apparatus with water bottle and water supply apparatus according to the present invention;
Figures 4A through 4C are cross-sectional views illustrating the construction of a water drainage pipe according to the present invention, of which:

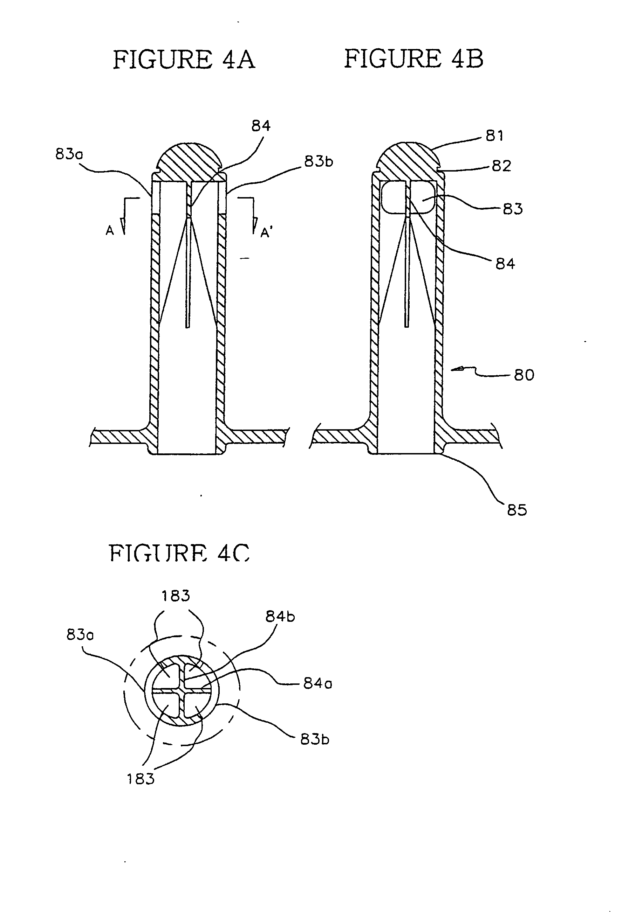

   Figure 4A is a front cross-sectional view;
   Figure 4B is a side cross-sectional view; and
   Figure 4C is a cross-sectional view taken along line A-A' of Figure 4A;

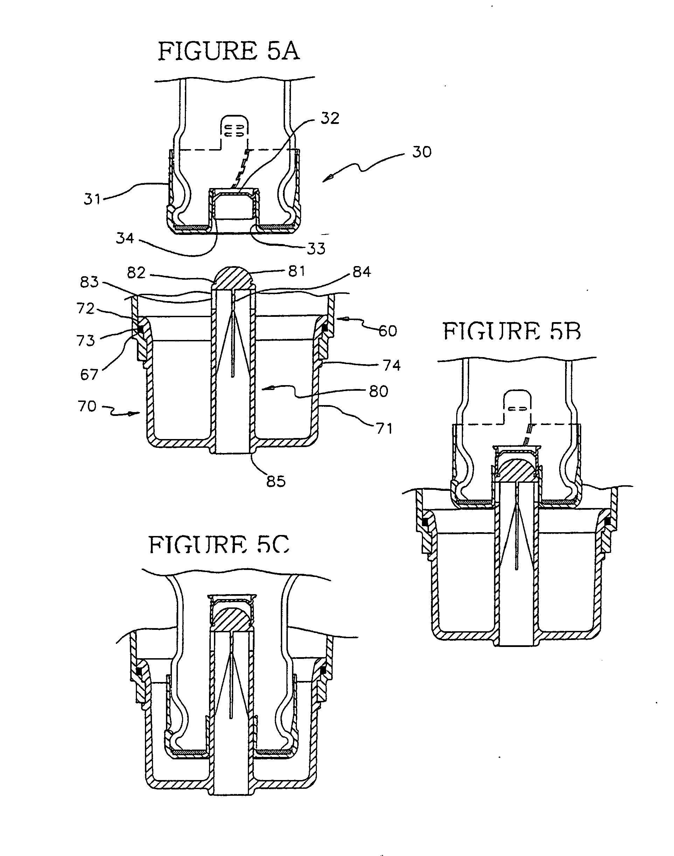

Figures 5A through 5C are cross-sectional views illustrating a process whereby a water bottle is mounted upside down in a water dispensing and water bottle supporting apparatus according to the present invention, of which:
   Figure 5A is a view illustrating a state before the water bottle is inserted;
   Figure 58 is a view illustrating a state when the water bottle is partially inserted; and
   Figure 5C is a view illustrating a state when the water bottle is fully inserted;

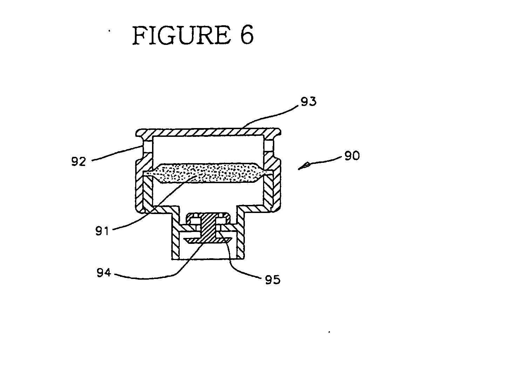

Figure 6 is a cross-sectional view illustrating an air filtering apparatus according to the present invention; and

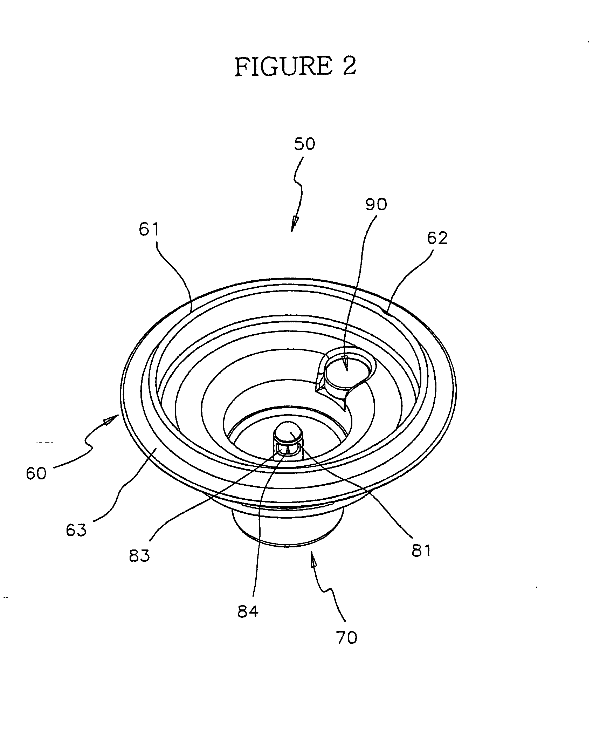

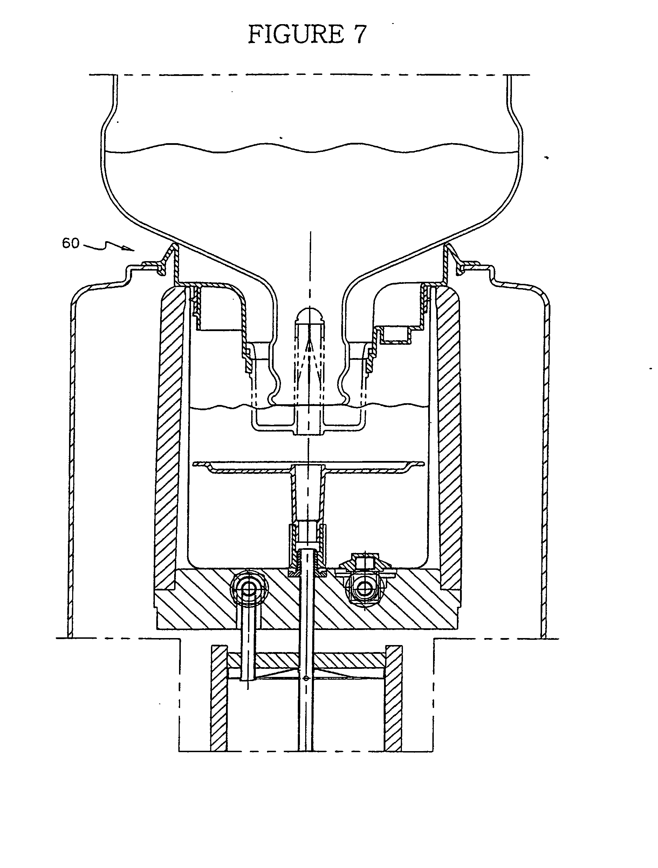

Figure 7 is a cross-sectional view illustrating the water dispensing and water bottle supporting apparatus of Figures 2 to 6 with for use with only the upper water bottle receiving portion is installed for use with a water bottle, from which the stopper has been removed;

### DETAILED DESCRIPTION OF THE PREFERRED EMBODIMENTS

The preferred embodiments of the present invention will be explained with reference to the accompanying drawings.

A duplex stopper-type water dispensing and water bottle supporting apparatus according to the present invention is installed on an upper portion of a water storing container 12 of a water bottle-type water supply apparatus 10. A water bottle 20 having a duplex stopper 30 is inserted into the upper portion of the water storing container 12 in an upside down configuration, so that the water is supplied from the water bottle 20 to the water storing container 12.

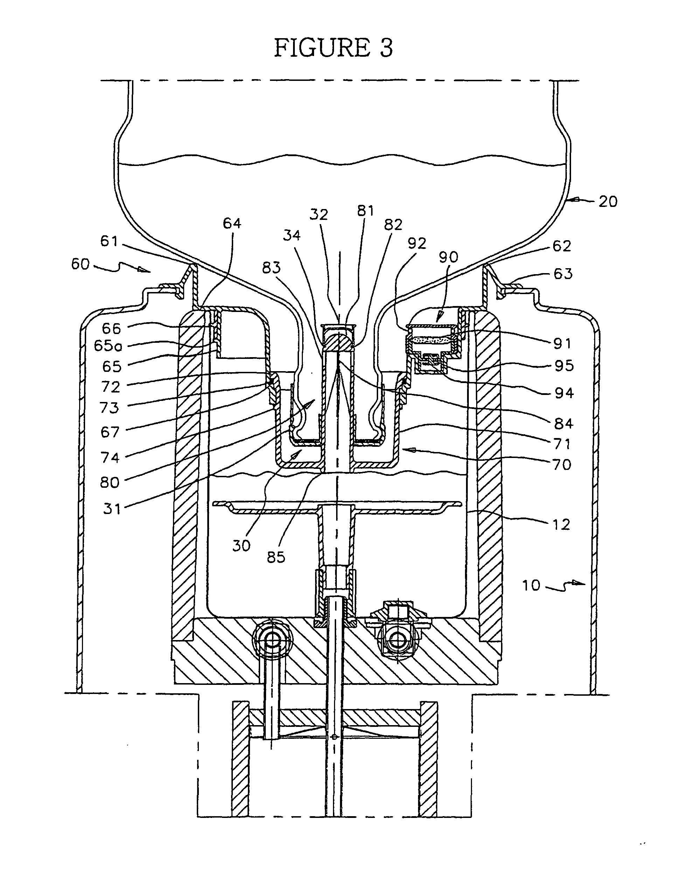

As shown in Figures 2 and 3, the duplex stopper-type water dispensing and water bottle supporting apparatus includes an upper water bottle receiving portion 60 and a lower water draining pipe portion 70 which are sealingly engaged by an O-ring 73.

The water bottle receiving portion 60 includes an air filtering apparatus 90 for filtering air which is drawn in when the water is discharged from the water bottle 20. The water draining pipe portion 70 includes a water drainage pipe 80 for supplying the water from the water bottle 20 to the water storing container.

The operations of the duplex stopper 30 and the water drainage pipe 80 will be explained.

As shown in Figure 5A, the duplex stopper 30 of the water bottle 20 adapted to the water bottle type water supply apparatus 10 is formed of a smooth plastic material, and an outer stopper 31 seals a bottle neck of the water bottle 20, and an inner stopper 32 is tightly inserted into an upper portion of a central sleeve 33 for thereby sealing the water bottle 20.

The process whereby that the water bottle 20 having a duplex stopper 30 is mounted on the water dispensing and water bottle supporting apparatus 50 installed in the water bottle-type water supply apparatus 10 in an upside down configuration will be explained with reference to Figures 5A, 5B and 5C.

When the water bottle 20 is held upside down, the duplex stopper 30 is mounted on a rounded head 81 above the water drainage pipe 80 of the water dispensing and water bottle supporting apparatus 50, so that the sleeve 33 is inserted into the water drainage pipe 80.

At this time, the inner stopper 32 is guided by the rounded head 81 of the front end of the water drainage pipe 80, and a circular shoulder portion 34 of the end portion of the inner stopper 32 is engaged with a circular shoulder portion 82 below the rounded head 81.

The sleeve 33 is closely contacted with an outer wall of the water drainage pipe 80 and is moved downwardly. The inner stopper 32 is engaged with the circular shoulder portion 82 and is pushed upwardly and freed from the sleeve 33.

The sleeve 33 is moved down onto a water draining portion 83 formed in a lateral upper portion of the water drainage pipe 80, and the water bottle 20 is engaged by a water bottle engaging shoulder portion 61 of the water bottle receiving portion 60.

In this state, air is inputted into the interior of the water bottle 20, and the water is drawn into the water storing container 12 through the water draining portion 83 and the water drainage pipe 80.

When the water in the storing container 12 rises to the height of a water spreading prevention shoulder portion 85 in a lower portion of the water drainage pipe 80 which extends into the interior of the water storing container 12, air is no longer able to enter the water bottle 20. A negative pressure is increased in the empty space within the upper portion of the water bottle 20. The above negative pressure is balanced with the weight of the water due to gravity, so that the supply of water is stopped.

When removing the water bottle 20 from the water bottle-type water supply apparatus 10, the inner stopper 32 inserted into the circular shoulder portion 82 of the water drainage pipe 80 is re-engaged with the sleeve 33 to thereby seal the water bottle 20.

As shown in Figure 4, the water drainage pipe 80 includes a rounded head 81 at an upper end thereof with a circular shoulder portion 82 below the head 81. In the pipe 80, two opposing water draining apertures 83a, 83b are formed through which water flows to the upper side surface, and two intersecting guide plates 84a, 84b are installed therein. A first guide plate 84a bisects each of the water draining apertures 83a, 83b and a second guide plate 84b separates one water draining aperture 83a from the other water draining aperture 83b.

Since each water draining aperture 83a, 83b is divided by the first guide plate 84a, four water draining channels 183 are totally formed.

The guide plates 84 are connected to each other adjacent to the water draining portion 83 and then taper toward the inner wall of the water draining pipe 80 in an oblique line shape in a lower direction relative to the head 81. Through such taper, each guide plate splits into the lower portions, as shown in Figures 4A and 4B.

The second guide plate 84b as connected adjacent the water draining apertures 83a, 83b, prevents the water inputted into the water draining apertures 83a, 83b from being mixed. The first guide plate 84a with its lower tapered portions formed to bisect the water draining apertures 83a, 83b helps the water inputted into the water draining apertures to flow along the inner wall of the water drainage pipe 80 based on an adhesive force of the water flowing into the water draining apertures.

At this time, a certain space is formed in the center of the water drainage pipe 80 which is used as a flow path through which air flows into the water bottle 20.

The water in the water bottle 20 surges in response to incoming air, and the shape and position of the air path are changed based on the shape of the water stream which flows along the inner wall of the water drainage pipe 80.

The air flows into the water bottle 20 through a certain water draining channel 183 based on the above change, and the water is drained through the remaining water draining channels 183. Therefore, the water is continuously and smoothly discharged based on the concurrent exchange operation of the water and air in one pipe 80.

As noted earlier, in the conventional water draining apparatus, it is impossible to implement an efficient water draining operation due to the alternating exchange operation of the water and air in one pipe; alternatively, a complicated apparatus capable of separating an air inflow pipe and water drainage pipe is additionally needed.

As shown in Figure 3, the water bottle receiving portion 60 into which the water bottle 20 is inserted in an upside down configuration is positioned in a center upper portion of the water storing container 12 and includes a narrow cylindrical shape in a lower portion of the same for thereby guiding the bottle neck into a center portion.

An outer wing 63 covers an upper hole of the water bottle type water supply apparatus 10, and a water bottle mounting shoulder portion 61 is formed in an inner upper portion of the outer wing 63. A part of the shoulder portion is formed in a lower portion for thereby forming an air inlet portion 62.

An intermediate shoulder portion 64 is positioned on the upper portion of the water storing container 12 for thereby supporting the weight of the water bottle 20 and preventing a foreign substance from being inserted into the water storing container 12.

A circular vertical wing 65 is formed in an inner lower portion of the intermediate shoulder portion 64. A packing 66 is inserted onto the same for implementing a tight engagement with an upper inner side of the water storing container 12, so that it is possible to effectively seal the water storing container 12.

A shoulder portion 65a is formed in a lower portion of the circular vertical wing 65 for preventing an escape of the packing 66.

A hole communicating with the water storing container 12 is formed in an inner side of the circular vertical wing 65. An air filtering apparatus 90 is installed therein for filtering the air needed when draining the water from the water bottle 20.

An inner circular shoulder portion 67 is formed in a cylindrical inner end portion of a lower portion of the water bottle receiving portion 60 for engaging with the water draining pipe portion 70.

As shown in Figure 3, the water draining pipe portion 70 is cylindrically formed about the vertical water drainage pipe 80 and, engaged with a lower portion of the water bottle receiving portion 60, is positioned in the interior of the water storing container 12.

A water spreading prevention shoulder portion 85 communicating with the water drainage pipe 80 is installed in a bottom for preventing water from the water bottle 20 from being spread.

The inner diameter of a cylindrical vertical extension 71 is slightly larger than the outer diameter of the duplex stopper 30 for implementing an easier engagement and disengagement of the duplex stopper 30.

A circular shoulder portion 72 is outwardly formed in an upper end portion of the cylindrical vertical extension 71, and a plurality of shoulder portions 74 are formed below the same. An O-ring 73 is inserted between the shoulder portions 67, 72 for thereby sealingly engaging the water draining pipe portion 70 with the water bottle receiving portion 60.

The duplex stopper-type water dispensing and water bottle supporting apparatus described above is divided into the water bottle receiving portion 60 and the water draining pipe portion 70. Therefore, the apparatus described above may be adapted to a duplex stopper-type water dispensing and water bottle supporting apparatus as well as a water bottle having a common stopper. In this case, as shown in Figure 7, the common stopper of the water bottle 20 is removed and the bottle is inserted upside down into the water bottle receiving portion 60. In this configuration, it is possible to quickly use the system by simply removing the water draining pipe portion 70.

As shown in Figure 6, in the air filtering apparatus 90, a filter 91 is installed in the interior of a casing 93 in which an air path 92 is formed. The air flowing in through the air path 92 is filtered by the filter 91 and is supplied to the water storing container 12 through a lower check valve 94 and an air hole 95.

In the event that a water bottle 20 having a small hole due to damage is installed in the water supply apparatus 10, air is freely inputted into the water bottle 20, so that the draining operation of the water in the water bottle 20 is not controlled by the water level of the water storing container 12. As a result, the water may fully fill the sealed water storing container 12 and overflow beyond the air filtering apparatus 90. The check valve 94 is installed to prevent such an occurrence.

The check valve 94, which is formed of a smooth material, is forcibly inserted into the air hole 95 and is installed in a hanging state. During normal operation, the check valve is downwardly moved to thereby implement a smooth circulation of air. In the case of too much water in the container, the check valve 94 is moved upwardly and covers the air hole 95, thereby preventing water from overflowing beyond the water storing container 12.

The inflow of external air for a draining operation in the duplex stopper-type water dispensing and water bottle supporting apparatus 50 will be summarized as follows. The external air flows into the water storing container 12 through the air inlet portion 62 formed in the water bottle mounting shoulder portion 61 and the filter 91 of the air filtering apparatus and flows into the water bottle 20 through the center of the water drainage pipe 80.

The draining operation of the duplex stopper-type water dispensing and water bottle supporting apparatus 50 will be summarized as follows. The water in the water bottle 20 is guided by the guide plates 84 through the water draining apertures 83 and flows into the water storing container 12 along an inner wall of the water drainage pipe 80.

Therefore, in the present invention, it is possible to implement a smooth water draining operation based on a concurrent exchange operation of the water draining and air inflow in one pipe.

Figure 7 is a cross-sectional view illustrating the apparatus described above with a water bottle from which the stopper is removed, mounted in an upside down configuration in a state such that only a water bottle receiving portion is installed in the water dispensing and water bottle supporting apparatus.

As described above, in the present invention, when downwardly dispensing the water from the water bottle mounted in the water bottle-type water supply apparatus to the water storing container, it is possible to implement a smooth water draining operation based on a concurrent operation of a water draining and air inflow in one pipe. Therefore, in the present invention, construction is simplified, and fabrication cost is decreased. A cleaning operation is also easily performed. The present invention is well adapted to a sanitizing apparatus.

As the present invention may be embodied in several forms without departing from the spirit or essential characteristics thereof, it should also be understood that the above-described embodiments are not limited by any of the details of the foregoing description, unless otherwise specified, but rather should be construed broadly within the scope of the invention as defined in the appended claims, and therefore all changes and modifications that fall within the metes and bounds of the claims are therefore intended to be embraced by the appended claims.

## Claims

1. A duplex stopper-type water dispensing and water bottle supporting apparatus for a water supply apparatus (10) of the type in which a water bottle (20) is mounted in an upside down configuration for thereby supplying a certain amount of water based on a principle of atmospheric pressure and which includes a water discharging tap (11) in an outer side of a casing, a cooling apparatus installed in the casing for supplying cooled water, a heating apparatus for supplying heated water and a water storing container (12) for storing a certain amount of water therein,
the duplex stopper-type water dispensing and water bottle supporting apparatus comprising:
an upper water bottle receiving portion (60) and a lower water draining pipe portion (70) including a water drainage pipe (80);
a circular shoulder portion (82) and a rounded head (81) formed in the water drainage pipe (80) for engaging an inner stopper of a duplex stopper in an upper portion of said water drainage pipe;
a water bottle supporting shoulder portion (61) and an air inlet portion (62) formed in one side of the water bottle receiving portion (60); and
an air filtering apparatus (90) for filtering and supplying air which flows in through the air inlet portion (61);
**characterised in that** the upper water bottle receiving portion (60) and the lower water draining pipe portion (70) are separable and are sealed by an O-ring (73),
**in that** the water drainage pipe (80) has a plurality of water draining apertures (83a and 83b) as well as a plurality of water draining channels (183) in a lower lateral surface of said pipe;
and **in that** a plurality of guide plates (84a and 84b) are formed in an interior of the water drainage pipe (80).

2. The apparatus of claim 1, wherein plurality of guide plates includes a first guide plate (84a) installed to bisect the water draining apertures (83a and 83b) and a second plate (84b) installed to separate the water draining apertures in parallel with the water drainage pipe (80), and a water spreading prevention shoulder portion (85) is formed in a lower portion of said water drainage pipe (80).

3. The apparatus of claim 1, wherein said guide plates (84a and 84b) of the water drainage pipe are connected to each other in an upper portion of said pipe, each guide plate dividing into two halves which taper in a lower direction and are integrated with the water drainage pipe.

4. The apparatus of claim 1, wherein said air filtering apparatus (90) includes a casing (93) having an air path (92) formed in a lateral portion, a filter (91), and a check valve (94) installed in a lower portion of said filtering apparatus for opening and closing an air hole (95) based on a buoyancy.

5. The apparatus as set forth in claim 1, wherein said plurality of water draining apertures includes two apertures (83a,83b) substantially equal in size and equidistantly spaced from one another so as to be on opposing sides of said piper (80).

6. The apparatus as set forth in claim 5, wherein said plurality of guide plates include a first guide plate (84a) and a second guide plate (84b), said first guide plate (84a) extending from one aperture to the other aperture so as to substantially bisect said apertures (83a,83b), and said second guide plate (84b) being substantially perpendicular to said first guide plate so as to form a barrier separating said apertures in an approximate center of said pipe (80).

7. The apparatus as set forth in claim 6, wherein each guide plate (84a,84b) extends from one side of said pipe (80) to an opposite side thereof in an upper portion of said pipe, each guide plate dividing thereunder into two halves which taper in a downward direction toward the sides of said pipe and are integrated with said pipe:

8. The apparatus as set forth in claim 1, wherein each guide plate (84a,84b) extends from one side of said pipe (80) to an opposite side thereof in an upper portion of said pipe, each guide plate dividing thereunder into two halves which taper in a downward direction toward the sides of said pipe and are integrated with said pipe.

9. The apparatus as set forth in claim 7, wherein said air filtering apparatus (90) filters air flowing into said water storing container through said air inlet and includes a check valve (94) for opening and closing an air hole (95) based on buoyancy, a force of rising water against a base of said check valve causing said valve to rise, closing said air hole and preventing further water flow into said water storing container (12).

## Patentansprüche

1. Wasserausgabe- und Wasserflaschentragvorrichtung mit zwei Hahnküken für einen Wasserspender (10) des Typs, bei dem eine Wasserflasche (20) auf dem Kopf stehend montiert ist, um **dadurch** eine bestimmte Menge Wasser auf der Basis des atmosphärischen Druckprinzips auszugeben, und mit einem Wasserzapfhahn (11) an einer Außenseite eines Gehäuses, einer in dem Gehäuse installierten Kühlvorrichtung zum Spenden von gekühltem Wasser, einer Heizvorrichtung zum Spenden von erhitztem Wasser und einem Wasservorratsbehälter (12) zum Aufbewahren einer bestimmten Wassermenge darin,
wobei die Wasserausgabe- und Wasserflaschentragvorrichtung mit zwei Hahnküken Folgendes umfasst:
einen oberen Wasserflaschenaufnahmeteil (60) und einen unteren Wasserablassrohrteil (70) mit einem Wasserablassrohr (80);
einen kreisförmigen Schulterteil (82) und einen runden Kopf (81), die im Wasserablassrohr (80) ausgebildet sind, um ein inneres Hahnküken eines Doppelhahnkükens in einem oberen Abschnitt des genannten Wasserablassrohrs in Eingriff zu bringen;
einen Wasserflaschenauflageschulterteil 1 (61) und einen Lufteinlassteil (62), die auf einer Seite des Wasserflaschenaufnahmeteils (60) ausgebildet sind; und
eine Luftfiltervorrichtung (90) zum Filtern und Zuführen von Luft, die durch den Lufteinlassteil (61) einströmt;
**dadurch gekennzeichnet, dass** der obere Wasserflaschenaufnahmeteil (60) und der untere Wasserablassrohrteil (70) durch einen Dichtungsring (73) voneinander getrennt und abgedichtet werden könnnen,
**dadurch**, dass das Wasserablassrohr (80) mehrere Wasserablassöffnungen (83a und 83b) sowie mehrere Wasserablasskanäle (183) in einer unteren seitlichen Fläche des genannten Rohrs hat;
und **dadurch**, dass mehrere Führungsplatten (84a und 84b) im Innern des Wasserablassrohrs (80) ausgebildet sind.

2. Vorrichtung nach. Anspruch 1, wobei die mehreren Führungsplatten eine erste Führungsplatte (84a), die so installiert ist, dass sie die Wasserablassöffnungen (83a und 83b) halbiert, und eine zweite Platte (84b) beinhalten, die so installiert ist, dass sie die Wasserablassöffnungen parallel zum Wasserablassrohr (80) trennt, und ein Wasserausbreitungsverhütungsschulterteil (85) in einem unteren Abschnitt des genannten Wasserablassrohrs (80) ausgebildet ist.

3. Vorrichtung nach Anspruch 1, wobei die genannten Führungsplatten (84a und 84b) des Wasserablassrohrs miteinander in einem oberen Abschnitt des genannten Rohrs verbunden sind, wobei jede Führungsplatte in zwei Hälften unterteilt ist, die nach unten konisch zulaufen und mit dem Wasserablassrohr integriert sind.

4. Vorrichtung nach Anspruch 1, wobei die genannte Luftfiltervorrichtung (90) ein Gehäuse (93) mit einem in einem seitlichen Abschnitt ausgebildeten Luftweg (92), einen Filter (91) und ein Rückschlagventil (94) beinhaltet, das in einem unteren Abschnitt der genannten Filtervorrichtung installiert ist, um ein Luftloch (95) auf Auftriebsbasis zu öffnen und zu schließen.

5. Vorrichtung nach Anspruch 1, wobei die genannten mehreren Wasserablassöffnungen zwei Öffnungen (83a, 83b) von im Wesentlichen gleicher Größe und im gleichen Abstand voneinander aufweisen, so dass sie auf gegenüberliegenden Seiten des genannten Rohrs (80) liegen.

6. Vorrichtung nach Anspruch 5, wobei die genannten mehreren Führungsplatten eine erste Führungsplatte (84a) und eine zweite Führungsplatte (84b) aufweisen, wobei die genannte erste Führungsplatte (84a) von einer Öffnung zur anderen Öffnung so verläuft, dass sie die genannten Öffnungen (83a, 83b) im Wesentlichen halbiert, und wobei die genannte zweite Führungsplatte (84b) im Wesentlichen lotrecht zu der genannten ersten Führungsplatte ist, um eine Barriere zu bilden, die die genannten Öffnungen etwa in der Mitte des genannten Rohrs (80) trennt.

7. Vorrichtung nach Anspruch 6, wobei jede Führungsplatte (84a, 84b) von einer Seite des genannten Rohrs (80) zu einer gegenüberliegenden Seite davon in einem oberen Abschnitt des genannten Rohrs verläuft, wobei jede Führungsplatte darunter in zwei Hälften unterteilt wird, die in einer Abwärtsrichtung zu den Seiten des genannten Rohrs hin konisch zulaufen und mit dem genannten Rohr integriert sind.

8. Vorrichtung nach Anspruch 1, wobei jede Führungsplatte (84a, 84b) von einer Seite des genannten Rohrs (80) zu einer gegenüberliegenden Seite davon in einem oberen Abschnitt des genannten Rohrs verläuft, wobei jede Führungsplatte darunter in zwei Hälften unterteilt ist, die in einer Abwärtsrichtung zu den Seiten des genannten Rohrs hin konisch zulaufen und mit dem genannten Rohr integriert sind.

9. Vorrichtung nach Anspruch 7, wobei die genannte Luftfiltervorrichtung (90) Luft filtert, die durch den genannten Lufteinlass in den genannten Luftvorratsbehälter strömt, und ein Rückschlagventil (94) zum Öffnen und Schließen eines Luftlochs (95) auf Auftriebsbasis beinhaltet, wobei eine Kraft von ansteigendem Wasser gegen eine Basis des genannten Rückschlagventils ein Ansteigen des genannten Ventils, ein Schließen des genannten Luftlochs und ein Verhindern von weiterem Wasserstrom in den genannten Wasservorratsbehälter (12) bewirkt.

## Revendications

1. Appareil de support de bouteille d'eau et de distribution d'eau du type à obturateur duplex (10) du type dans lequel une bouteille d'eau (20) est montée selon une configuration à l'envers pour fournir ainsi une certaine quantité d'eau basée sur un principe de pression atmosphérique et qui comprend un robinet distributeur d'eau (11) dans un côté extérieur d'un boîtier, un appareil de refroidissement monté dans le boîtier pour fournir de l'eau refroidie, un appareil de chauffage pour fournir de l'eau chauffée et un récipient de stockage d'eau (12) pour stocker une certaine quantité d'eau dedans,
L'appareil de support de bouteille d'eau et de distribution d'eau du type à obturateur duplex comprenant :
une partie supérieure de réception de bouteille d'eau (60) et une partie inférieure de tuyau de drainage (70) incluant un tuyau de drainage d'eau (80);
une partie d'épaulement circulaire (82) et une tête arrondie (81) formées dans la partie de drainage d'eau (80) pour engager un obturateur intérieur d'un obturateur duplex dans une partie supérieure dudit tuyau de drainage d'eau;
une partie d'épaulement de support de bouteille d'eau (61) et une partie d'admission d'air (62) formées dans un côté de la partie de réception de bouteille d'eau (60); et
un appareil de filtration d'air (90) pour filtrer et fournir de l'air qui entre et s'écoule à travers la partie d'admission d'air (61);
**caractérisé en ce que** la partie supérieure de réception de bouteille d'eau (60) et la partie inférieure de tuyau de drainage d'eau (70) sont séparables et sont scellées par un joint torique d'étanchéité (73),
**en ce que** le tuyau de drainage d'eau (80) a une pluralité d'ouvertures de drainage d'eau (83a et 83b) ainsi qu'une pluralité de gorges de drainage d'eau (183) dans une surface latérale inférieure dudit tuyau;
et **en ce qu'**une pluralité de tôles de guidage (84a et 84b) sont formées dans un intérieur du tuyau de drainage d'eau (80).

2. L'appareil de la revendication 1, dans lequel la pluralité de tôles de guidage comprend une première tôle de guidage (84a) montée pour bissecter les ouvertures de drainage d'eau (83a et 83b) et une deuxième tôle (84) montée pour séparer les ouvertures de drainage d'eau parallèlement au tuyau de drainage d'eau (80), et une partie d'épaulement de prévention de dispersion d'eau (85) est formée dans une partie inférieure dudit tuyau de drainage d'eau (80).

3. L'appareil de la revendication 1, dans lequel lesdites tôles de guidage (84a et 84b) du tuyau de drainage d'eau sont connectées l'une à l'autre dans une partie supérieure dudit tuyau, chaque tôle de guidage se divisant en deux moitiés qui rétrécissent dans une direction inférieure et sont intégrées au tuyau de drainage d'eau.

4. L'appareil de la revendication 1, dans lequel ledit appareil de filtration d'air (90) comprend un boîtier (93) ayant un chemin d'air (92) formé dans une partie latérale, un filtre (91) et une soupape d'arrêt (94) montée dans une partie inférieure dudit appareil de filtration pour ouvrir et fermer un trou d'air (95) sur la base d'une poussée hydrostatique.

5. L'appareil tel que stipulé dans la revendication 1, dans lequel ladite pluralité d'ouvertures de drainage d'eau comprend deux ouvertures (83a et 83b) de taille sensiblement égale et espacées à équidistance l'une de l'autre de manière à être sur des côtés opposés dudit tuyau (80).

6. L'appareil tel que stipulé dans la revendication 5, dans lequel ladite pluralité de tôles de guidage comprend une première tôle de guidage (84a) et une deuxième tôle de guidage (84b), ladite première tôle de guidage (84a) s'étendant d'une ouverture à l'autre ouverture de manière à bissecter sensiblement lesdites ouvertures (83a, 83b), et ladite deuxième tôle de guidage (84b) étant sensiblement perpendiculaire à ladite première tôle de guidage de manière à former une barrière séparant lesdites ouvertures selon un centre approximatif dudit tuyau (80).

7. L'appareil tel que stipulé dans la revendication 6, dans lequel chaque tôle de guidage (84a, 84b) s'étend d'un côté dudit tuyau (80) à un côté opposé de celui-ci dans une partie supérieure dudit tuyau, chaque tôle de guidage se divisant dessous en deux moitiés qui rétrécissent dans une direction descendante vers les côtés dudit tuyau et sont intégrées audit tuyau.

8. L'appareil tel que stipulé dans la revendication 1, dans lequel chaque tôle de guidage (84a, 84b) s'étend d'un côté dudit tuyau (80) à un côté opposé de celui-ci dans une partie supérieure dudit tuyau, chaque tôle de guidage se divisant dessous en deux moitiés qui rétrécissent dans une direction descendante vers les côtés dudit tuyau et sont intégrées audit tuyau.

9. L'appareil tel que stipulé dans la revendication 7, dans lequel ledit appareil de filtration d'air (90) filtre l'air s'écoulant dans ledit récipient de stockage d'eau à travers ladite admission d'air et comprend une soupape d'arrêt (94) pour ouvrir et fermer un trou d'air (95) sur la base d'une poussée hydrostatique, une force d'eau montante contre une base de ladite soupape d'arrêt faisant monter la soupape, fermer ledit trou d'air et empêcher un écoulement d'eau supplémentaire dans ledit récipient de stockage d'eau (12).
